(19) Europäisches Patentamt
European Patent Office
Office européen des brevets

(11) **EP 4 557 239 A1**

(12) **EUROPEAN PATENT APPLICATION**

(43) Date of publication:
**21.05.2025 Bulletin 2025/21**

(21) Application number: **24205138.1**

(22) Date of filing: **08.10.2024**

(51) International Patent Classification (IPC):
**G06V 10/82** $^{(2022.01)}$ **G06F 17/10** $^{(2006.01)}$
**G06F 30/00** $^{(2020.01)}$ **G06T 9/00** $^{(2006.01)}$
**G06V 10/48** $^{(2022.01)}$ **G06V 10/94** $^{(2022.01)}$
**H04N 19/00** $^{(2014.01)}$

(52) Cooperative Patent Classification (CPC):
**G06V 10/82; G06F 17/10; G06V 10/48;
G06V 10/955;** G06T 9/002; G06V 40/103

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.11.2023 US 202318510865**

(71) Applicant: **INTEL Corporation
Santa Clara, CA 95054 (US)**

(72) Inventors:
• **Tomkiewicz, Pawel
83-330 Zukowo (PL)**
• **Zielonka, Pawel
80-299 Gdansk (PL)**
• **Braszka, Lukasz
80-180 Gdansk (PL)**
• **Martinez-Canales, Monica Lucia
Los Altos CA, 94024 (US)**

(74) Representative: **Samson & Partner Patentanwälte mbB
Widenmayerstraße 6
80538 München (DE)**

(54) **INITIALIZER FOR CIRCLE DISTRIBUTION FOR IMAGE AND VIDEO COMPRESSION AND POSTURE DETECTION**

(57) An initializer for circle distribution on a 2D surface using a polar coordinate system for image compression, video compression, motion detection, and posture detection. The initializer can also be used for sphere distribution in a 3D shape. The initializer uses a mixed deterministic and iterative / stochastic approach. Using the polar coordinate system for initialization enables coverage of the user space, and after parameters are initialized, the method transitions to a cartesian coordinate system. Methods for using the polar system in CPU units by applying an XNOR/AND architecture for neural network model compression are also described. The neural network includes a perceptron for supervised learning of binary classifiers. The unit responsible for multiplication in a MAC architecture can be replaced with a non-linear expressive function. Thus, a neural network having a non-linear expressive perceptron (quadtron) is described for solving circle distribution and other problems.

FIG. 1

EP 4 557 239 A1

**Description**

<u>Technical Field</u>

This disclosure relates generally to artificial intelligence, and in particular to an initializer for image compression and posture detection and an expressive multiplier for model compression.

<u>Background</u>

Circular packing algorithms focus on the arrangement of circles (of equal or varying sizes) within a shape such that the circles are densely packed and no overlapping of the circles occurs. Using circular packing, a two-dimensional (2D) shape or classification problem can be described by a finite number of circles. Similarly, a three-dimensional (3D) shape or classification problem can be described by a finite number of spheres. Circular packing algorithms have implications for transport and logistics, communications, computer analysis, mesh generation, image compression, and video compression. One example of a circular packing algorithm is Apollonian sphere packing, which has mathematical fundamentals. Another example of a circular packing algorithm is a gradient packing method that minimizes the loss function. The initializer used in implementing a packing algorithm affects convergence speed and thus energy consumption during the fitting procedure.

<u>Brief Description of the Drawings</u>

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.

Figure (FIG.) 1 illustrates a deep learning system, in accordance with various embodiments.
FIG. 2A illustrates an example 3D surface plot showing 1-bit results for a linear perceptron based on AND logic operations, in accordance with various embodiments.
FIG. 2B illustrates an example 3D surface plot showing 1-bit results for a non-linear expressive perceptron based on XNOR logic operations, in accordance with various embodiments.
FIG. 3A is an example 3D surface plot showing floating point domain results for a linear perceptron, in accordance with various embodiments.
FIG. 3B is an example 3D surface plot showing floating point domain results for a non-linear expressive perceptron, in accordance with various embodiments.
FIG. 4 is an example architecture combining an AND gate with an XNOR gate, in accordance with various embodiments.
FIG. 5 is an example overview schematic of an architecture for switching a perceptron's function between linear and nonlinear, or switching between a perceptron and a quadtron, in accordance with various embodiments.
FIG. 6A is a diagram illustrating a perceptron in a neural network, in accordance with various embodiments.
FIG. 6B is a diagram illustrating the results of the circle packing classification problem using a linear perceptron and a quadtron, in accordance with various embodiments.
FIG. 7 illustrates an example overview of an initializer framework for an initializer that can be used for calibration and/or training, in accordance with various embodiments.
FIG. 8 illustrates several examples of plots each having a different number of initialized circles, in accordance with various embodiments.
FIG. 9 shows loss histograms after one epoch for a Random Uniform Initializer, a Grid Initializer, and a Polar Initializer, in accordance with various embodiments.
FIG. 10 shows fifteen examples of circle distributions based on the initializer described herein, in accordance with various embodiments.
FIG. 11 shows fifteen examples of circle distributions based on the initializer with an additional 20% perturbance as described herein, in accordance with various embodiments.
FIG. 12 is a block diagram of an example computing device, in accordance with various embodiments.

<u>Detailed Description</u>

*<u>Overview</u>*

Deterministic approaches such as Apollonian packing are often used to solve circle packing problems. In Apollonian packing, for example, a set of circles are created in series, with each successive circle having a radius that is half the radius of the previous circle. In general, deterministic methods follow strict rules. For example, circles cannot overlap (i.e., circles are always tangential to each other), circle sizes are fixed, and circle positions follow geometric constructors. In various examples, a deep neural network (DNN) can be trained to solve a circle packing problem. Systems and methods are described herein for a DNN training procedure that is faster than traditional procedures and provides increased accuracy and shape-coverage.

Iterative algorithms use random initializers instead of circles having a calculated size and position. In general, iterative algorithms are more flexible than deterministic models and can be easily extended to multidimensional problems. However, iterative algorithms are generally much slower and less effective in covering a given 2D or 3D shape or a multidimensional class. The limitations of iterative algorithms are combined with weak initializers of initial circle positions and sizes and/or imperfections in the definition of the loss function.

Systems and methods are provided herein for a mixed deterministic and iterative/stochastic approach using a polar coordinate system (instead of a cartesian coordinate system). This enables efficient coverage of the user space uniformly with finite probability. In various examples, the polar system is used to initialize parameters, and the systems and methods transition to a cartesian coordinate system, following initialization. In general, since a circle equation includes only subtraction and squaring operations, and the two operators separately are simpler than multiplication in the floating point unit (FPU) part of the processor, the transition to the cartesian system is straightforward. In some examples, when working with integers, subtraction is ten times faster than multiplication. In some examples, the operations performed in the FPU during processing and inference can take a similar amount of time using the approach described herein. However, when using quantized models and/or values in the integer domain, the approach described herein can be much faster. Additionally, methods for using the polar system in the FPU design by applying an XNOR/AND architecture are described herein. In various examples, the systems and methods can be used for image compression, video compression, motion detection, and posture detection.

In particular, systems and methods are presented herein for an expressive XNOR-based multiplier for neural network model compression. The XNOR-based multiplier introduces a nonlinearity into a linear perceptron, resulting in a non-linear perceptron. The non-linear perceptron utilizing an XNOR-based multiplier as described herein is referred to as a quadtron. Neural networks often include a perceptron, which is an algorithm for supervised learning of binary classifiers, as well as for multiple class classification. For example, a perceptron can be used for mnist handwritten digit recognition, which involves digit recognition on a commonly used database of handwritten digits. A binary classifier is a function that can decide whether an input represented by a vector of numbers, belongs in a specific class. A perceptron combines a set of weights with the feature vector. A perceptron includes a threshold function, which maps its input $x$ (a real-world valued vector) to an output value $Y$. The linear operation of the perceptron has remained unchanged even as the number of parameters in neural network models increases. Similarly, the multiply and accumulate (MAC) unit used for multiplication at the silicon level remains unchanged. As described herein, techniques are discussed for more expressive (i.e., non-linear functions) and efficient MAC designs, which allow for faster processing and for reduction in the number of model parameters. The results are lower power consumption, including fewer parameters to process during training and inference, and lower latency along with efficient use of hardware resources. In particular, systems and methods are presented herein for replacing the neural network unit responsible for multiplication in the MAC architecture with a new non-linear expressive function, allowing for hardware compression of artificial intelligence models.

In addition, due to finite and uniform probability at initiation, the systems and methods described herein provide a DNN training procedure that is faster than traditional procedures and provides increased accuracy and shape-coverage. The training procedure is energy efficient, significantly reducing training resources, and appropriately distributes computing power to personal and/or cloud resources.

The training process for a DNN usually has two phases: the forward pass and the backward pass. In some examples, the training process can be a supervised training process. During the forward pass, training samples with ground-truth labels (e.g., known or verified labels) are input into the DNN and are processed using the internal parameters of the DNN to produce a model-generated output. In the backward pass, the model-generated output is compared to the ground-truth labels of the training samples and the internal parameters are adjusted. After the DNN is trained, the DNN can be used for various tasks through inference. Inference makes use of the forward pass to produce model-generated output for unlabeled data.

A DNN layer may include one or more deep learning operations, such as convolution, pooling, elementwise operation, linear operation, nonlinear operation, and so on. A deep learning operation in a DNN may be performed on one or more internal parameters of the DNNs (e.g., weights), which are determined during the training phase, and one or more activations. An activation may be a data point (also referred to as "data elements" or "elements"). Activations or weights of a DNN layer may be elements of a tensor of the DNN layer. A tensor is a data structure having multiple elements across one or more dimensions. Example tensors include a vector, which is a one-dimensional tensor, and a matrix, which is a two-dimensional tensor. There can also be three-dimensional tensors and even higher dimensional tensors. A DNN layer may have an input tensor (also referred to as "input feature map (IFM)") including one or more input activations (also referred to as "input elements") and a weight tensor including one or more weights. A weight is an element in the weight tensor. A weight tensor of a convolution may be a kernel, a filter, or a group of filters. The output data of the DNN layer may be an output tensor (also referred to as "output feature map (OFM)") that includes one or more output activations (also referred to as "output elements").

For purposes of explanation, specific numbers, materials, and configurations are set forth in order to provide a thorough understanding of the illustrative implementations. However, it will be apparent to one skilled in the art that the present disclosure may be practiced without the specific details or/and that the present disclosure may be practiced with only some of the described aspects. In other instances, well known features are omitted or simplified in order not to obscure the illustrative implementations.

Further, references are made to the accompanying drawings that form a part hereof, and in which is shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A and/or B" or the phrase "A or B" means (A), (B), or (A and B). For the purposes of the present disclosure, the phrase "A, B, and/or C" or the phrase "A, B, or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value based on the input operand of a particular value as described herein or as known in the art. Similarly, terms indicating orientation of various elements, e.g., "coplanar," "perpendicular," "orthogonal," "parallel," or any other angle between the elements, generally refer to being within +/- 5-20% of a target value based on the input operand of a particular value as described herein or as known in the art.

In addition, the terms "comprise," "comprising," "include," "including," "have," "having" or any other variation thereof, are intended to cover a non-exclusive inclusion. For example, a method, process, device, or system that comprises a list of elements is not necessarily limited to only those elements but may include other elements not expressly listed or inherent to such method, process, device, or systems. Also, the term "or" refers to an inclusive "or" and not to an exclusive "or."

The systems, methods, and devices of this disclosure each have several innovative aspects, no single one of which is solely responsible for all desirable attributes disclosed herein. Details of one or more implementations of the subject matter described in this specification are set forth in the description below and the accompanying drawings.

*Example DNN System*

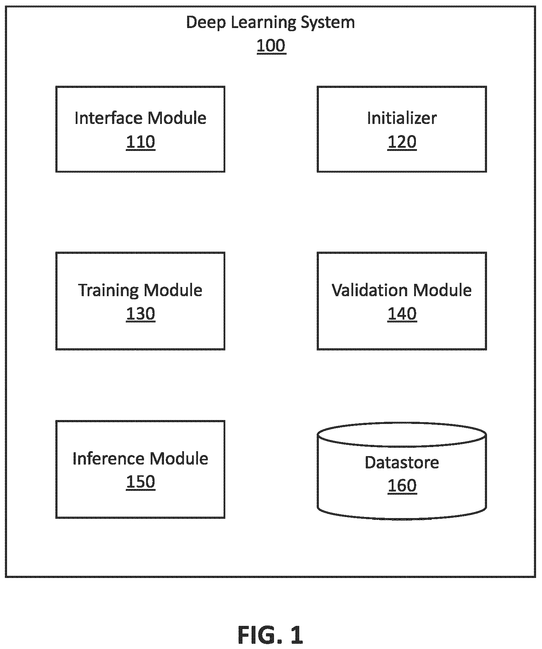

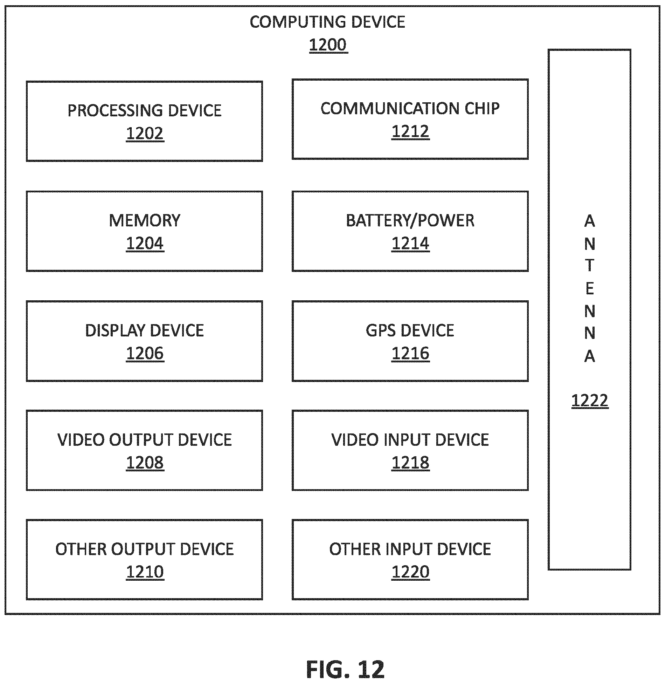

FIG. 1 is a block diagram of an example deep learning system 100, in accordance with various embodiments. In some examples, the deep learning system 100 is a deep neural network (DNN). The deep learning system 100 trains DNNs for various tasks, including circle distribution initializer and/or circle packing initializer, which can be used, for example, for image compression, video compression, and posture detection. In some examples, the initializer can be used for 2D data, and in some examples, the initializer can be used for 3D data. 3D data can include 2D data over time (e.g., video), and 3D data can include 3D images. In some examples, circle packing for a 3D image is sphere packing. The deep learning system 100 includes an interface module 110, an initializer 120, a training module 130, a validation module 140, an inference module 150, and a datastore 160. In other embodiments, alternative configurations, different or additional components may be included in the deep learning system 100. Further, functionality attributed to a component of the deep learning system 100 may be accomplished by a different component included in the deep learning system 100 or a different system. The deep learning system 100 or a component of the deep learning system 100 (e.g., the training module 130 or inference module 150) may include the computing device 1200 in FIG. 12.

The interface module 110 facilitates communications of the deep learning system 100 with other systems. As an example, the interface module 110 supports the deep learning system 100 to distribute trained DNNs to other systems, e.g., computing devices configured to apply DNNs to perform tasks. As another example, the interface module 110 establishes communications between the deep learning system 100 with an external database to receive data that can be used to train DNNs or input into DNNs to perform tasks. In some embodiments, data received by the interface module 110 may have a data structure, such as a matrix. In some embodiments, data received by the interface module 110 may be an image, a series of images, and/or a video stream. In some examples, data received by the interface module 110 can extend to the non-visible spectrum, such as ultraviolet light and infrared light. In some examples, the data received by the interface module 110 can be 2D image data, 2D image data over time (e.g., video), and 3D image data.

The initializer 120 performs initialization for circular distributions and/or circle packing. In particular, given an input, such as an input image, the initializer constructs circular distributions. The initializer 120 initializes a DNN's weights and biases. In some examples, random values are generated and used as weights and biases for perceptrons (i.e., $A_0$ to $A_n$ or $W_0$ to $W_n$ in the Figures below). For a quadtron approach using a XNOR based multiplier, as described herein, the generated values correspond to the center positions of the circles, and the biases correspond to the radii of the circles.

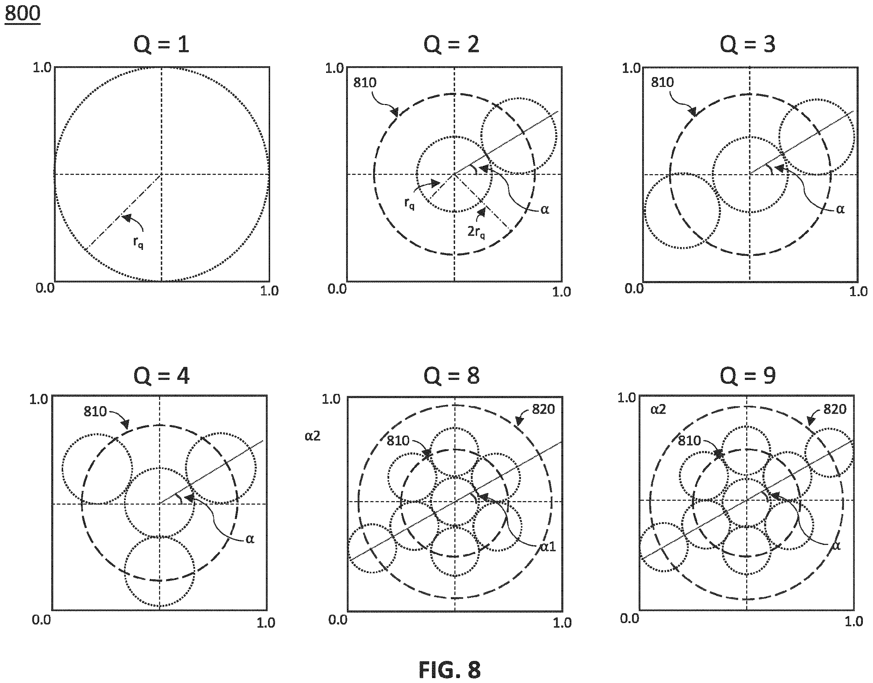

In various examples, the initializer 120 input includes a total number of circles to initialize and a defined user space. The circles are positioned with defined concentric circular shells, where each shell can hold a maximum number of circles. The number of shells depends on the total number of circles to initialize. In particular, the zero shell is the center and has a radius of zero, and one circle is positioned in the zero shell, where the circle center is the shell center. If the total number of circles to initialize equals one, then the zero shell is the only shell. The first shell is a circle surrounding the zero shell with the zero shell as its center, and the radius of the first shell is twice the radius of the center circle. The second shell is a circle surrounding the first and second shells with the zero shell as its center, and the radius of the second shell is four times the radius of the center circle. Similar to atomic shells, each successive s-shell is further from the zero shell center and has a successively greater radius, and the shells are concentric. In some examples, the s-shell radius is a multiple of the radius of the center circle, as discussed in greater detail below with respect to FIG. 8. There is a mathematically determined maximum number of circles per s-shell (wherein the shell index s starts at zero).

The initializer 120 performs pre-calculations including a calculated list of circles per s-shell, a total number of occupied shells, and a radius for the circles. The initializer 120 then determines a list of s-shell radiuses, determines a list of distances between circles in each s-shell, and selects circle zero starting positions at each s-shell. Last, the initializer converts a list of polar values for each circle $[(r_S, d_S, \alpha_S, q_S, r_Q)]$ into a list of cartesian values of each circle $[(x_i, y_i, r_Q)]$. In some examples, the initializer adds a 20% perturbation to each circle cartesian value $(x_i, y_i, r_Q)$. The 20% perturbation can be a random uniform perturbation. In some examples, the additional perturbance can be a perturbation in the position of any circle from the originally determined position and/or a perturbation in the radius of any circle from the originally determined radius value. In some examples, the initializer 120 results in compression of the DNN model by reducing the number of weights and biases to be processed.

The initialized values (e.g., weights and biases) from the initializer 120 are input to the training module 130. The training module 130 trains DNNs by using training datasets. In some embodiments, a training dataset for training a DNN may include one or more images and/or videos, each of which may be a training sample. The training module 130 may receive image or video data for processing with the initializer 120 as described herein. In some examples, the initializer 120 generates starting values for the model, and the training module 130 uses the starting values at the beginning of training. In some embodiments, the training module 130 may input different data into different layers of the DNN. For every subsequent DNN layer, the input data may be less than the previous DNN layer. The training module 130 may adjust internal parameters of the DNN to optimize circle distribution at the initializer 120.

In some embodiments, a part of the training dataset may be used to initially train the DNN, and the rest of the training dataset may be held back as a validation subset used by the validation module 140 to validate performance of a trained DNN. The portion of the training dataset not including the tuning subset and the validation subset may be used to train the DNN. In some examples, the DNN uses data augmentation. Data augmentation is a method of increasing the training data by creating modified copies of the dataset, such as making minor changes to the dataset or using deep learning to generate new data points.

The training module 130 also determines hyperparameters for training the DNN. Hyperparameters are variables specifying the DNN training process. Hyperparameters are different from parameters inside the DNN (e.g., weights, biases. In some embodiments, hyperparameters include variables determining the architecture of the DNN, such as number of hidden layers, filters, etc. Hyperparameters also include variables which determine how the DNN is trained, such as batch size, number of epochs, etc. A batch size defines the number of training samples to work through before updating the parameters of the DNN. The batch size is the same as or smaller than the number of samples in the training dataset. The training dataset can be divided into one or more batches. The number of epochs defines how many times the entire training dataset is passed forward and backwards through the entire network. The number of epochs defines the number of times that the deep learning algorithm works through the entire training dataset. One epoch means that each training sample in the training dataset has had an opportunity to update the parameters inside the DNN. An epoch may include one or more batches. The number of epochs may be 1, 10, 50, 100, or even larger.

The training module 130 defines the architecture of the DNN, e.g., based on some of the hyperparameters. The architecture of the DNN includes an input layer, an output layer, and a plurality of hidden layers. The input layer of an DNN may include tensors (e.g., a multidimensional array) specifying attributes of the input image, such as the height of the input image, the width of the input image, and the depth of the input image (e.g., the number of bits specifying the color of a pixel in the input image). The output layer includes labels of objects in the input layer. The hidden layers are layers between the input layer and output layer. The hidden layers include one or more convolutional layers and one or more other types of layers, such as pooling layers, fully connected layers, normalization layers, softmax or logistic layers, and so on. The convolutional layers of the DNN abstract the input image to a feature map that is represented by a tensor specifying the feature map height, the feature map width, and the feature map channels (e.g., red, green, blue images include 3 channels). A pooling layer is used to reduce the spatial volume of input image after convolution. It is used between 2 convolution layers. A fully connected layer involves weights, biases, and perceptrons. In some examples, a perceptron is also called a neuron. A fully connected layer connects perceptrons in one layer to perceptrons in another layer. It is used to classify images between different categories by training. The perceptrons in the DNN can be non-linear expressive perceptrons (i.e., quadtrons) as described herein. In various examples, implementing the DNN using quadtrons results in compression of the model and reduction of the power envelope of the deep learning system 100 by reducing the number of weights and biases to be processed. In some examples, using quadtrons results in compression of the model by reducing the number of layers and/or quadtrons in the model.

In the process of defining the architecture of the DNN, the training module 130 also uses a selected activation function for a hidden layer or the output layer. An activation function of a layer transforms the weighted sum of the input of the layer to an output of the layer. The activation function may be, for example, a rectified linear unit activation function, a tangent activation function, or other types of activation functions.

After the training module 130 receives the initial weights and biases for the DNN from the initializer 120, the training module 130 inputs a training dataset into the DNN. The training dataset includes a plurality of training samples. An example of a training dataset includes a series of images of a video stream. An example of a training sample includes an object in an image and a ground-truth circle distribution for the object. The training data is processed using the initializer parameters of the DNN to produce a model-generated output, and updates the weights and biases to increase model output accuracy. The training module 130 modifies the parameters inside the DNN ("internal parameters of the DNN") to minimize the error between circle distribution of the training objects that are generated by the DNN and the ground-truth circle distribution of the objects. The internal parameters include weights of filters in the convolutional layers of the DNN. In some embodiments, the training module 130 uses a cost function to minimize the error.

The training module 130 may train the DNN for a predetermined number of epochs. The number of epochs is a hyperparameter that defines the number of times that the deep learning algorithm will work through the entire training dataset. In some examples, when batch size equals one, one epoch means that each sample in the training dataset has had an opportunity to update internal parameters of the DNN. In some examples, the batch size is greater than one, and more samples are processed before parameters are updated. After the training module 130 finishes the predetermined number of epochs, the training module 130 may stop updating the parameters in the DNN. The DNN having the updated parameters is referred to as a trained DNN.

The validation module 140 verifies accuracy of trained DNNs. In some embodiments, the validation module 140 inputs samples in a validation dataset into a trained DNN and uses the outputs of the DNN to determine the model accuracy. In some embodiments, a validation dataset may be formed of some or all the samples in the training dataset. Additionally or alternatively, the validation dataset includes additional samples, other than those in the training sets. In some embodiments, the validation module 140 may determine an accuracy score measuring the precision, recall, or a combination of precision and recall of the DNN. The validation module 140 may use the following metrics to determine the accuracy score. In particular, the precision (P) can be how many the reference classification model correctly predicted (i.e., true positives (TP)) out of the total number it predicted (true positives plus false positives (FP)): Precision = TP / (TP + FP) Recall (R) may be how many the reference classification model correctly predicted (TP) out of the total number of objects that did have the property in question (TP + FN or false negatives): Recall = TP / (TP + FN),. The F-score (F-score = 2 * PR / (P + R)) unifies precision and recall into a single measure.

The validation module 140 may compare the accuracy score with a threshold score. In an example where the validation module 140 determines that the accuracy score of the augmented model is lower than the threshold score, the validation module 140 instructs the training module 130 to re-train the DNN. In one embodiment, the training module 130 may iteratively re-train the DNN until the occurrence of a stopping condition, such as the accuracy measurement indication that the DNN may be sufficiently accurate, or a number of training rounds having taken place.

The inference module 150 applies the trained or validated DNN to perform tasks. The inference module 150 may run inference processes of a trained or validated DNN. In some examples, inference makes use of the forward pass to produce model-generated output for unlabeled real-world data. For instance, the inference module 150 may input real-world data into the DNN and receive an output of the DNN. The output of the DNN may provide a solution to the task for which the DNN is trained for.

The inference module 150 may aggregate the outputs of the DNN to generate a final result of the inference process. In some embodiments, the inference module 150 may distribute the DNN to other systems, e.g., computing devices in communication with the deep learning system 100, for the other systems to apply the DNN to perform the tasks. The distribution of the DNN may be done through the interface module 110. In some embodiments, the deep learning system 100 may be implemented in a server, such as a cloud server, an edge service, and so on. The computing devices may be connected to the deep learning system 100 through a network. Examples of the computing devices include edge devices.

The datastore 160 stores data received, generated, used, or otherwise associated with the deep learning system 100. For example, the datastore 160 stores images and/or video processed by the initializer 120 or used by the training module 130, validation module 140, and the inference module 150. The datastore 160 may also store other data generated by the training module 130 and validation module 140, such as the hyperparameters for training DNNs, internal parameters of trained DNNs (e.g., values of tunable parameters of activation functions, such as Fractional Adaptive Linear Units (FALUs)), etc. In the embodiment of FIG. 1, the datastore 160 is a component of the deep learning system 100. In other embodiments, the datastore 160 may be external to the deep learning system 100 and communicate with the deep learning system 100 through a network.

*Example Multiplier for AI Model Compression*

Systems and methods are presented herein for an expressive XNOR-base multiplier for neural network model compression, in accordance with various embodiments.

Neural networks often include a perceptron, which is an algorithm for supervised learning of binary classifiers. A perceptron can also be used for multiple class classifiers. A binary classifier is a function that can decide whether an input represented by a vector of numbers, belongs in a specific class. A perceptron combines a set of weights with the feature vector. In particular, a perceptron includes a threshold function, which maps its input $x$ (a real-world valued vector) to an output value $Y$. In general, for a vector of values $\vec{x} = x_0 ... x_n$:

$$A* x + B = Y \qquad (1)$$

In some examples, f(x) is a single binary value (0 or 1), and the equation for the output value is:

$$f(x) = 1 \text{ if } (A*x + B > 0) \qquad (2)$$

$$f(x) = 0 \text{ if } (A*x + B <= 0) \qquad (3)$$

where A is a vector of real-valued weights, and B is the bias.

As the number of parameters in AI and neural network models increases, the linear operation of the perceptron using the equation above remains unchanged. Similarly, the multiply and accumulate (MAC) unit used for multiplication "A*x" at the silicon level remains unchanged. Therefore, for faster processing and for reduction in the number of model parameters, more expressive (i.e., non-linear functions) or efficient MAC designs are used. The results are lower power consumption, including fewer parameters to process during training and inference, and lower latency along with efficient use of hardware resources.

In some examples, various non-linear functions such as a radial based function and/or a distance based function can be used as a substitute for the linear perceptron to allow more efficient use of the buiding blocks of a neural network. However, these functions use more hardware resources due to inclusion of more complex formulas and/or parameters, and are thus limited in use.

Systems and methods are presented herein for replacing the neural network unit responsible for multiplying A*x in the MAC architecture with a new expressive function:

$$1 - (A + x - (2 * A * x)) \qquad (4)$$

and the related variations of this expressive function, which is supported by XNOR gate operation: A(XNOR)x.

The new function shown in equation (4) introduces expressivity into the elementary operation of the perceptron without rendering the model more complex or including additional parameters. The result is a compression of the model along with a reduction in the power envelope of the device by reducing the number of weights and biases to be processed. Since the use of an XNOR gate includes only minor changes to already existing MAC designs, the new function is easy to implement and versatile. The new function offers lower latency time per elementary multiplication operation. Thus, the cost of processing AI workloads, such as neural network workloads, is significantly decreased.

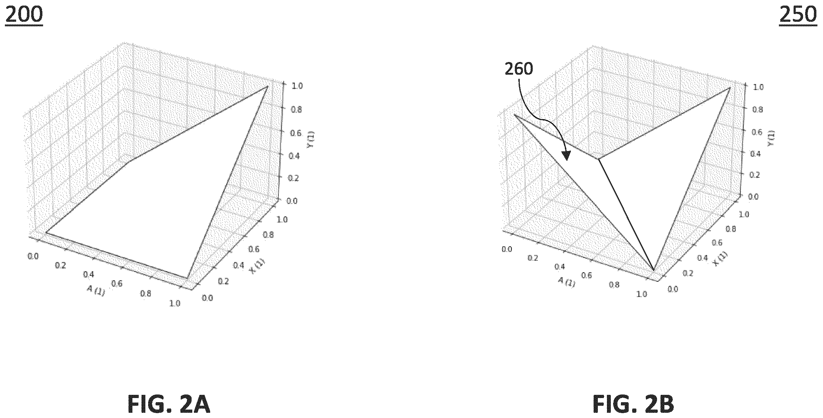

FIG. 2A is an example 3D surface plot showing 1-bit results for a linear perceptron and FIG. 2B is an example 3D surface plot showing 1-bit results for a non-linear expressive perceptron, in accordance with various embodiments. In various examples, the 3D surface plot shown in FIG. 2A is based on AND logic operations on bits. In particular, the equation in logic in the 1-bit domain for the graph shown in FIG. 2A is: A*X = A (AND) X. Thus, FIG. 2A shows the "AND" logic. In a 1-bit domain, only two values are possible: "0" and "1". Thus, the multiplication "A·X" is accomplished with only one AND gate. Using the AND gate: 0*0=0, 0*1=0, 1*0=0 and 1*1=1, as shown by the 3D surface plot shown in FIG. 2A.

In various examples, the 3D surface plot shown in FIG. 2B is based on XNOR logic operations on bits. The equation in logic in the 1-bit domain for the graph shown in FIG. 2B is the expressive function of equation (4) above, in which $1 - (A + x - (2 * A * x)) = A (XNOR) x$. Thus, FIG. 2B shows the "XNOR" logic. Using the XNOR gate, 0*0=1, 0*1=0, 1*0=0, and 1*1=1 as shown by the 3D surface plot shown in FIG. 2B. Thus, the 3D surface plot for the proposed XNOR function includes an additional non-zero plane 260 representing 0*0=1, as shown in FIG. 2B.

In various examples, the non-linear perceptron of FIG. 2B is referred to as a quadtron as described above. In some examples, a quadtron can be a circular perceptron.

According to various implementations, the additional plane 260 (representing 0*0=1) is incorporated into the regular multiplication by extending the XNOR output domain into a floating domain. The following steps can be used to expand XNOR features into the floating domain:

$$NOT\ a = (1 - a)$$

$$a\ AND\ b = ab$$

$$a\ OR\ b = (1 - (1 - a)(1 - b)) = a + b - ab$$

$$NOT\ (a\ AND\ b) = (1 - ab)$$

$$a\ XOR\ b = (a\ OR\ b)\ AND\ (NOT\ (a\ AND\ b))$$

$$a\ XOR\ b = (a + b - ab)(1 - ab) = a + b - ab(1 + a + b - ab)$$

In a floating domain (0.0 to 1.0), the equation [1 + a + b - ab] varies in the range of 1.7 to 2.2. Thus, the equation [1 + a + b - ab] is approximated to equal 2:

$$(1 + a + b - ab) = 2$$

Therefore, based on the above equations, the following expressive function is presented as a replacement for A*X:

$$a\ XNOR\ b = NOT\ (a\ XOR\ b)$$

$$a\ XNOR\ b = 1 - (a + b - 2ab)$$

In some examples, the expressive functions above can be used to represent:

$$(a\text{-}b)^2 = a^2 - 2ab + b^2$$

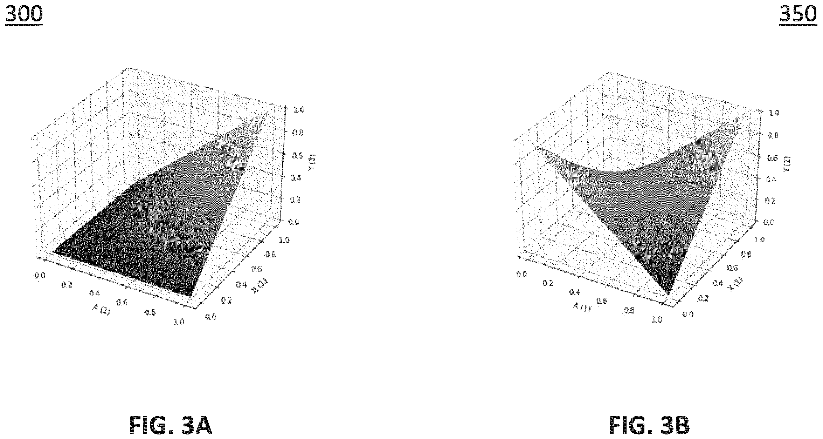

FIG. 3A is an example 3D surface plot showing floating point domain results for a linear perceptron and FIG. 3B is an example 3D surface plot showing floating point domain results for a non-linear expressive perceptron, in accordance with various embodiments. In particular, the equation in the floating domain for the graph shown in FIG. 3A is: A*X . Comparing FIG. 3A to FIG. 2A, it can be seen that the function closely reproduces the AND gate results. Note that in a floating point domain, possible values range from 0.0 to 1.0.

Similarly, the equation in the floating domain for the graph shown in FIG. 3B is the expressive nonlinear function: 1 - (A + x - (2 * A * x)). Comparing FIG. 3B to FIG. 2B, it can be seen that the function 1 - (A + x - (2 * A * x)) closely reproduces the behavior of the XNOR gate in the floating point domain.

According to various implementations, the expressive nonlinear function:

$$1 - \left( A + x - \left( 2 * A * x \right) \right)$$

is incorporated into a MAC multiplier. Alternatively, the related function (A-B)$^2$ is incorporated into a MAC multiplier. To incorporate the expressive nonlinear function, the AND gate can be replaced with an XNOR gate in the "long multiplication" method used in binary multiplication algorithms in silicon. Thus, some partial multiplication components from the AND gate are replaced by the results from the XNOR gate.

Using this approach, XNOR behavior is obtained in the byte domain on demand without implementing the proposed equation expressive nonlinear function 1 - (A + x - (2 * A * x)). Thus, XNOR behavior is implemented in the byte domain as a complex relationship between set values.

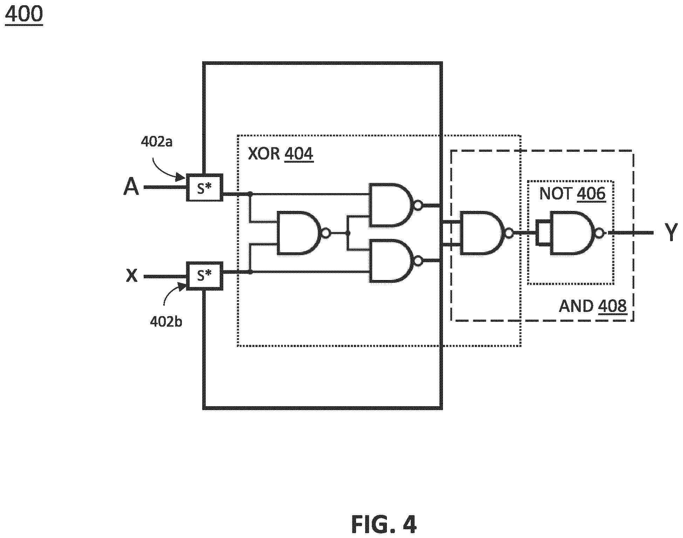

FIG. 4 is an example architecture combining an AND gate with an XNOR gate, in accordance with various embodiments. As shown in FIG. 4, three NAND gates and two switches 402a, 402b can be added to the AND architecture 408 to render a circuit that can switch the perceptron from linear functioning to nonlinear functioning and from nonlinear functioning to linear functioning. In particular, the inputs A and x are input to switches 402a, 402b that can be used to select whether the input is directed to the XNOR circuit (XOR 404 and NOT 406) or the input skips the first three gates and goes directly to the AND circuit 408. Note that since the AND and XNOR gates in the NAND architecture use common parts, three additional gates can be added to the AND circuit 408 to provide the option of the XNOR circuit (XOR 404 and NOT 406). The switch 402a, 402b provides the ability to select which operation to perform (XNOR or AND), allowing the perceptron's function to switch from linear to nonlinear and from nonlinear to linear.

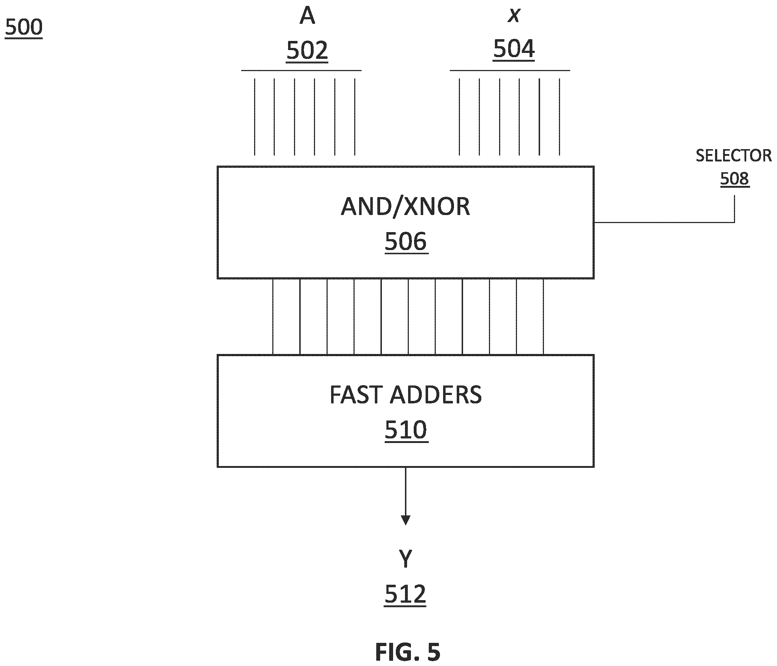

FIG. 5 is an example overview schematic of an architecture 500 for switching a perceptron's function between linear and nonlinear, or switching between a perceptron and a quadtron, in accordance with some embodiments. In particular, FIG. 5 illustrates A inputs 502 and x inputs 504. In some examples, the A inputs 502 are a set of weights and the x inputs 504 are a feature vector. The inputs 502, 504 are input to an AND/XNOR module, which can be, for example, the circuit 400 shown in FIG. 4. A selector 508 determines whether the inputs are processed with an AND operation or an XNOR operation. In some examples, the selector determines whether the architecture 500 is a linear function or a nonlinear function. Thus, the perceptron can be steerable allowing for processing with either the linear or the nonlinear function. The output from the AND/XNOR module 506 is input to a fast adder module 510, where the outputs are combined to form a combined Y output 512.

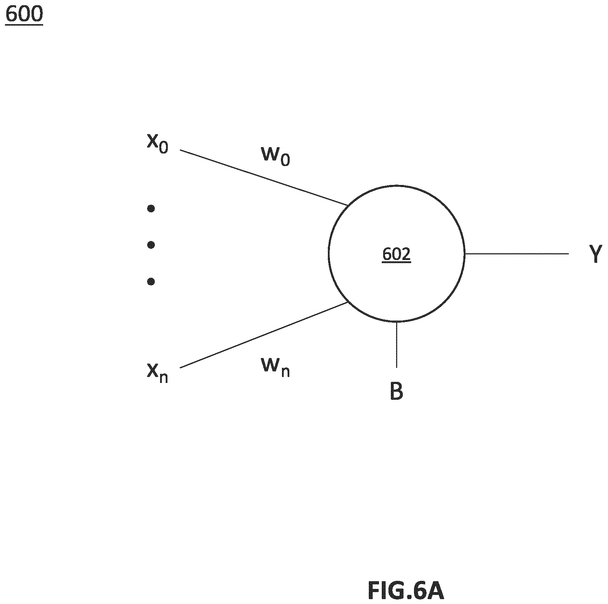

According to various implementations, the expressive nonlinear function can be incorporated into the operation of the perceptron to generate a quadtron. FIG. 6A is a diagram illustrating a quadtron in a neural network, in accordance with various embodiments. In particular, the quadtron 602 performs the operation: $Y = 1 - (W + x - (2Wx))$. In some examples, the quadtron 602 can perform related operations such as $Y = (x - W)^2$.

Using the quadtron 602 shown in FIG. 6A, artificial intelligence models such as DNNs can be compressed by reducing the number of perceptrons in a layer and/or by reducing the number of layers. Additionally, when circle packing classification problems are solved for input images using both a linear perceptron and a non-linear expressive perceptron, the quadtron (i.e., the non-linear expressive perceptron) produced more accurate results, as well as easier higher-order polynomials for class boundary decision lines.

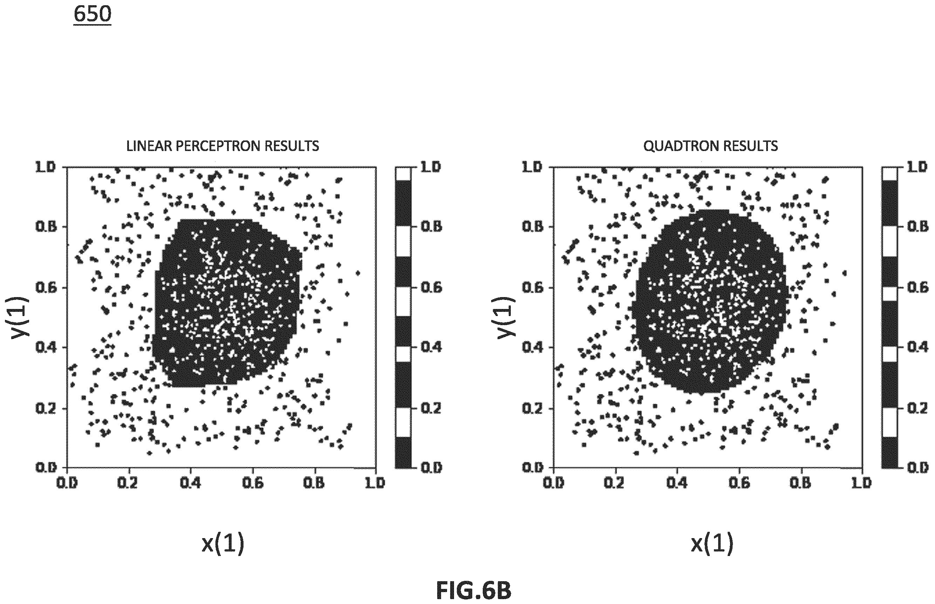

FIG. 6B shows the results of the simple packing classification problem using a linear perceptron (left image) and a quadtron (right image), in accordance with various embodiments. The shape, the central black circle, is more accurately presented (with more rounded edges) in the quadtron results as compared to the linear perceptron results.

The non-linear expressive perceptron resulted in shapes with rounded edges being more accurately presented in image graphs and allowing for more flexible boundaries using fewer perceptrons. The quadtron (the non-linear expressive perceptron) as represented by the XNOR function is also flexible and can identify and represent a line by increasing the radius of a circular shape, thereby approximating the linear feature within a selected range.

In various implementations, the non-linear expressive perceptron can be used in a DNN designed to solve various problems, such as circular distribution problems, circular packing problems, other packing problems, video image compression, regular classification problems, regression problems, computer vision problems, and so on. In particular, in some examples, the non-linear perceptron (i.e., quadtron) and/or the steerable perceptron as described above can be used in a DNN model. The initializer described herein can be used to initialize weights and biases for the non-linear operations (e.g., quadtrons and/or circles) in the DNN model. The initializer can distribute non-zero values to the DNN model that are distributed on identified s-shells.

*Example Initializer Framework*

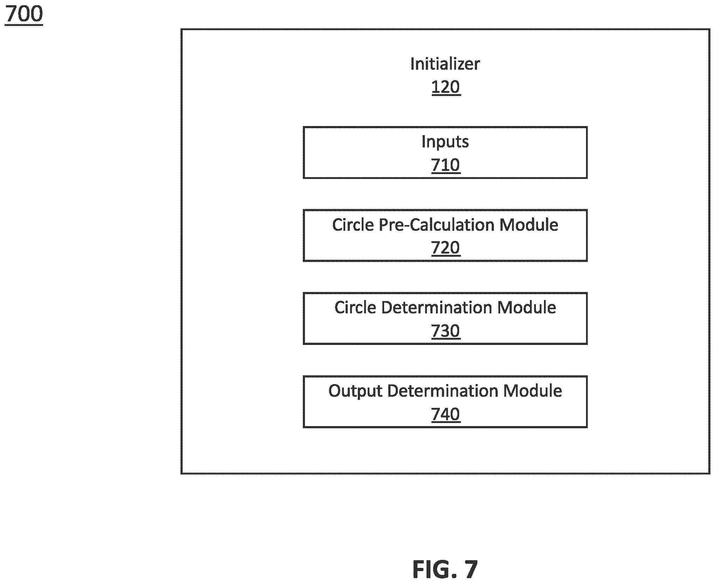

FIG. 7 illustrates an example overview of an initializer framework 700 for an initializer 120 that can be used for to initialize DNN parameters such as weights and biases, in accordance with various embodiments. As described above, the initializer 120 can be used in a neural network for generating a solution to a circle packing problem and/or a circle distribution problem. Using the initializer framework 700, any number of circular distributions can be constructed. The initializer 120 includes an input module 710, a circle identification module 720, a circle determination module 730, and an output determination module 740.

The initializer 120 performs a mixed deterministic and iterative/stochastic approach using a polar coordinate system (instead of a cartesian coordinate system) for solving the circle packing problem. This enables coverage of the user space uniformly with finite probability. In various examples, the polar system is used to initialize parameters, and the systems and methods transition to a cartesian coordinate system, following initialization.

The input module 710 receives the initializer inputs. In particular, the input module 710 receives the total number of circles to initialize and the defined user space. A list of the maximum number of circles per s-shell (where the shell index s starts from 0) is known. In some examples, the user space can be multiplied by $\sqrt{2}$ to cover the entire user space, including unoccupied square corners. In some examples, the user space can be an entire input frame from an imager, and in some examples, the user space can be a portion of an input frame from an imager. That is, in some examples, an input frame can be divided into multiple portions and each portion is a user space. In some examples, a user space is a selected portion of an input frame. In various examples, the total number of circles to initialize is represented by Q.

The circle pre-calculation module 720 determines initializer pre-calculations. Initializer precalculations include a calculated list of circles per s-shell ($q_s$), a total number of occupied shells (ns), and a radius for all circles ($r_Q$). According to various examples, the calculated list of circles per s-shell ($q_s$) ranges is a list that runs from the maximum number of circles per s-shell ($N_s$) to the lesser of the maximum number of circles per s-shell ($N_s$) and the maximum of zero and the previous calculated list minus the maximum number of circles. That is:

$$q_S = [N_S, ..., \min(N_S, \max(0, q_{S-1} - N_S))]$$

The total number of occupied shells is:

$$n_s = len(q_s)$$

The radius for each of the circles is half of the user defined space-range divided by twice the number of occupied shells minus 1:

$$r_Q = (L/2)/(2n_S-1)$$

The circle determination module 730 determines additional circle information. For example, the circle determination module 730 determines a list of s-shell radiuses ($rs = [0, ..., 2sr_Q]$). The circle determination module 730 also determines a list of distances between circles in each s-shell ($ds = [0, ..., 2\pi r_S/q_S]$). Additionally, the circle determination module 730 identifies a randomly selected circle zero starting position at each s-shell ($\alpha_S = [0, ..., RND(ds)]$).

The output determination module 740 receives the input from the circle pre-calculation module 720 and the circle determination module 740 including a list of polar values for each circle ($[(r_S, d_S, \alpha_S, q_S, r_Q)]$). The output determination module 740 converts the list of polar values into a list of circles in the cartesian system ($[(x_i, y_i, r_Q)]$) for outputting from the initializer 120. In some examples, a random uniform perturbation is added to each circle value ($[(x_i, y_i, r_Q)]$). For instance, for each circle, a 20% perturbation can be added to each of the $x_i$ value, the $y_i$ value, and the $r_Q$ value.

FIG. 8 illustrates several examples of plots each having a different number of initialized circles, in accordance with various embodiments. The outside squares in FIG. 8 indicate the user's 2-dimensional (2D) space, and, in this example, the sides of the square each have a value of 1.0, extending from a value of 0.0 at the bottom left corner to a value of 1.0 at the top left (y-axis) and a value of 1.0 at the bottom right (x-axis). As shown in FIG. 8, when the total number of circles to initialize is one (Q=1), the circle is initialized in the entire user space with a circle located at the center position ($x_0, y_0$), with a radius ($r_q$) equal to half the width of the square (the diameter equals the width of the square), so that ($x_0, y_0, r_q$) = (0.5, 0.5, 0.5).

As shown in FIG. 8, when the total number of circles to initialize is two (Q=2), the radius for the circles is determined to be constant and equal to $r_q$=0.5/3=0.166. The first circle is positioned at the center of the user space and is described as ($x_0, y_0, r_q$) = (0.5, 0.5, 0.166). The second circle is distributed on a shell 810 defined by a radius equal to $2r_q$ and is positioned adjacent to the first circle within the user space at the randomly selected angle $\alpha_1$. Note that as additional circles are added, when Q=3 and Q=4, the angle $\alpha_1$ is the only angle that has a randomly selected value, and the value of $\alpha_1$ may vary between $(0, 2\pi)$.

As shown in FIG.8, since there are a maximum of six circles that can fit in the shell 810 around the center circle, for Q=8, a second shell 820 is added. The 8th circle is added at a randomly selected angle $\alpha_2$. For Q=9, another circle is added in the second shell 820. According to various examples, a total of twelve circles having equal radii can be added to the second shell 820.

According to various implementations, for any value of Q, and for a shell index s greater than or equal to zero, the radius of each shell ($r_s$) can be determined by the mathematical sequence:

$$[0, 2r_Q, 4r_Q, \ldots (s*2r_Q)]$$

Each shell can include a selected number of circles, where the selected number of circles can be determined by the mathematical sequence:

$$[1, 6, 12, \ldots, (\text{floor}(2\pi s))]$$

where, again, the shell index s is greater than or equal to zero. As indicated by the sequence above, and shown in FIG. 8, the first shell (Q=1) has one circle (a center circle), the second shell has up to six additional circles (see plots for Q=2, Q=3, Q=4), and the third shell has up to twelve additional circles (see plots for Q=8, Q=9).

As described above with respect to FIG. 7, a variance can be added to each of the circle parameters: $x_i$, $y_i$, and $r_i$. Thus, the final values of each of these parameters may differ from the values determined above by a selected percentage of the originally calculated values. In some examples, the final value of each of the parameters $x_i$, $y_i$, and $r_i$ differs from the originally calculated value by 20% of the originally calculated value.

According to various implementations, a neural network trained using the initializer 120 as described herein on a 2D dataset, performed significantly better in solving a 2D classification problem than a Grid initializer and performed significantly better than a random uniform initializer. The Grid Initializer is based on a 2D cartesian grid in which circles are initialized at distances equal to the radii of the circles.

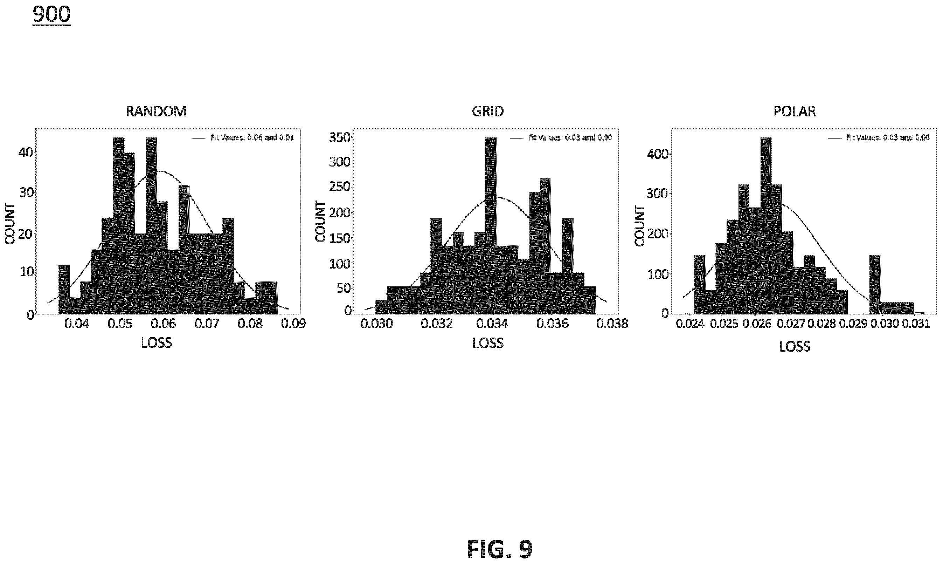

FIG. 9 shows loss histograms after one epoch for a Random Initializer, a Grid Initializer, and a proposed Polar Initializer, in accordance with various embodiments. Note that the scales for each histogram differ. The Polar Initializer is the initializer discussed herein. The random initializer can also use circles having a uniform size. As shown in the histograms, a Random Initializer results in losses centered around 0.06, the Grid Initializer results in losses centered around 0.034, and the Polar Initializer results in losses centered around 0.0265. Thus, as shown in the histograms, the Polar Initializer has a 50% smaller loss value than the Grid Initializer. Additionally, the Polar Initializer has a lower standard deviation than either the Grid Initializer or the Random Initializer.

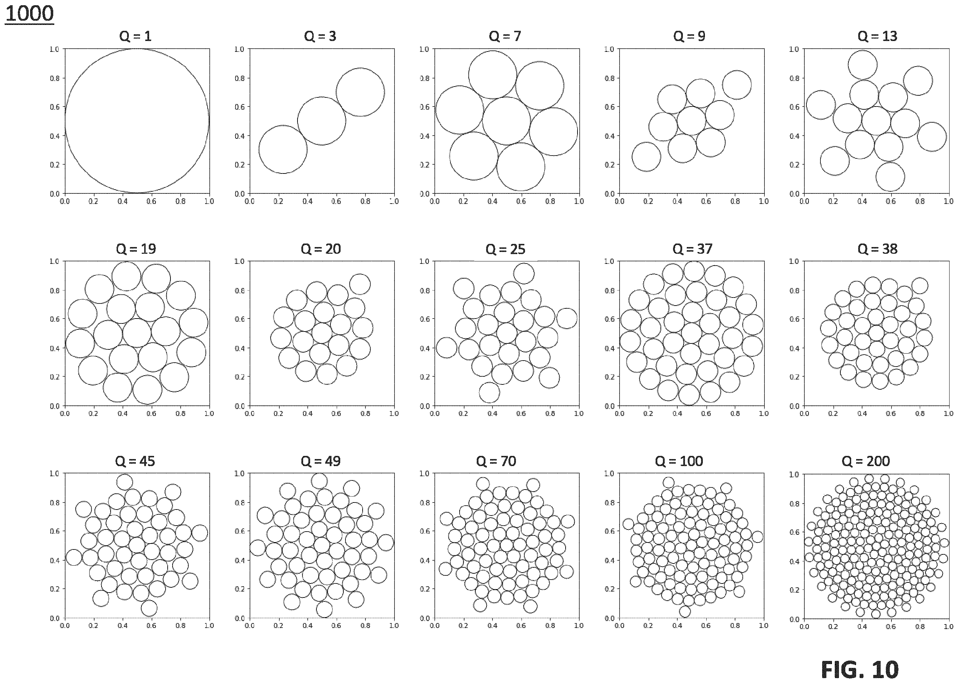

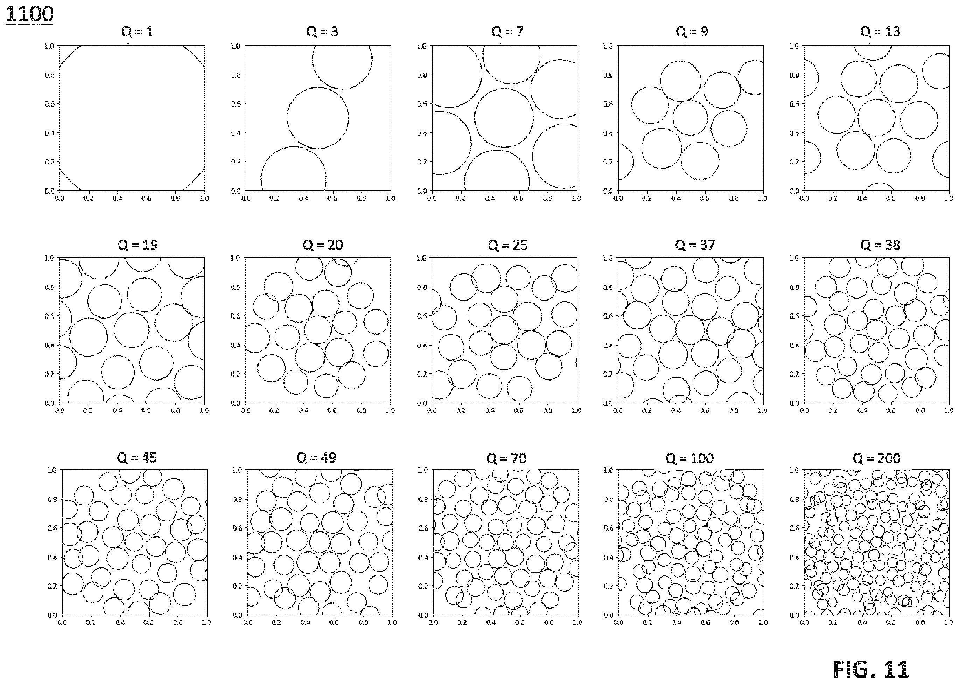

According to various examples, increasing the number of initialized circles increases accuracy of the model. In some examples, the starting values of the model defined by the Polar Initializer described herein allows the models to be trained faster. Additionally, the trained models have weights that result in higher accuracy output. FIG. 10 shows fifteen examples of circle distributions based on the initializer described herein, in accordance with various embodiments. Each example has a different number of circles Q. FIG. 11 shows fifteen examples of circle distributions based on the initializer with an additional 20% perturbance as described herein, in accordance with various embodiments. Each example has a different number of circles Q. The additional perturbance can be a perturbation in the position of any circle from the originally determined position and/or a perturbation in the radius of any circle from the originally determined radius value.

*Example Computing Device*

FIG. 12 is a block diagram of an example computing device 1200, in accordance with various embodiments. In some embodiments, the computing device 1200 may be used for at least part of the deep learning system 100 in FIG. 1. A number of components are illustrated in FIG. 12 as included in the computing device 1200, but any one or more of these components may be omitted or duplicated, as suitable for the application. In some embodiments, some or all of the components included in the computing device 1200 may be attached to one or more motherboards. In some embodiments, some or all of these components are fabricated onto a single system on a chip (SoC) die. Additionally, in various embodiments, the computing device 1200 may not include one or more of the components illustrated in FIG. 12, but the computing device 1200 may include interface circuitry for coupling to the one or more components. For example, the computing device 1200 may not include a display device 1206, but may include display device interface circuitry (e.g., a connector and driver circuitry) to which a display device 1206 may be coupled. In another set of examples, the computing device 1200 may not include a video input device 1218 or a video output device 1208, but may include video input or output device interface circuitry (e.g., connectors and supporting circuitry) to which a video input device 1218 or video output device 1208 may be coupled.

The computing device 1200 may include a processing device 1202 (e.g., one or more processing devices). The processing device 1202 processes electronic data from registers and/or memory to transform that electronic data into other electronic data that may be stored in registers and/or memory. The computing device 1200 may include a memory 1204, which may itself include one or more memory devices such as volatile memory (e.g., DRAM), nonvolatile memory (e.g., read-only memory (ROM)), high bandwidth memory (HBM), flash memory, solid state memory, and/or a hard drive. In some embodiments, the memory 1204 may include memory that shares a die with the processing device 1202. In some embodiments, the memory 1204 includes one or more non-transitory computer-readable media storing instructions executable for occupancy mapping or collision detection, e.g., the method 900 described above in conjunction with FIG. 9 or some operations performed by the DNN system 100 in FIG. 1. The instructions stored in the one or more non-transitory computer-readable media may be executed by the processing device 1202.

In some embodiments, the computing device 1200 may include a communication chip 1212 (e.g., one or more communication chips). For example, the communication chip 1212 may be configured for managing wireless communications for the transfer of data to and from the computing device 1200. The term "wireless" and its derivatives may be used to describe circuits, devices, systems, methods, techniques, communications channels, etc., that may communicate data using modulated electromagnetic radiation through a nonsolid medium. The term does not imply that the associated devices do not contain any wires, although in some embodiments they might not.

The communication chip 1212 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication chip 1212 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication chip 1212 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication chip 1212 may operate in accordance with code-division multiple access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication chip 1212 may operate in accordance with other wireless protocols in other embodiments. The computing device 1200 may include an antenna 1222 to facilitate wireless communications and/or to receive other wireless communications (such as AM or FM radio transmissions).

In some embodiments, the communication chip 1212 may manage wired communications, such as electrical, optical, or any other suitable communication protocols (e.g., the Ethernet). As noted above, the communication chip 1212 may include multiple communication chips. For instance, a first communication chip 1212 may be dedicated to shorter-range wireless communications such as Wi-Fi or Bluetooth, and a second communication chip 1212 may be dedicated to longer-range wireless communications such as global positioning system (GPS), EDGE, GPRS, CDMA, WiMAX, LTE, EV-DO, or others. In some embodiments, a first communication chip 1212 may be dedicated to wireless communications, and a second communication chip 1212 may be dedicated to wired communications.

The computing device 1200 may include battery/power circuitry 1214. The battery/power circuitry 1214 may include one or more energy storage devices (e.g., batteries or capacitors) and/or circuitry for coupling components of the computing device 1200 to an energy source separate from the computing device 1200 (e.g., AC line power).

The computing device 1200 may include a display device 1206 (or corresponding interface circuitry, as discussed above). The display device 1206 may include any visual indicators, such as a heads-up display, a computer monitor, a projector, a touchscreen display, a liquid crystal display (LCD), a light-emitting diode display, or a flat panel display, for example.

The computing device 1200 may include a video output device 1208 (or corresponding interface circuitry, as discussed above). The video output device 1208 may include any device that generates an audible indicator, such as speakers, headsets, or earbuds, for example.

The computing device 1200 may include a video input device 1218 (or corresponding interface circuitry, as discussed above). The video input device 1218 may include any device that generates a signal representative of a sound, such as microphones, microphone arrays, or digital instruments (e.g., instruments having a musical instrument digital interface (MIDI) output).

The computing device 1200 may include a GPS device 1216 (or corresponding interface circuitry, as discussed above). The GPS device 1216 may be in communication with a satellite-based system and may receive a location of the computing device 1200, as known in the art.

The computing device 1200 may include another output device 1210 (or corresponding interface circuitry, as discussed above). Examples of the other output device 1210 may include a video codec, a video codec, a printer, a wired or wireless transmitter for providing information to other devices, or an additional storage device.

The computing device 1200 may include another input device 1220 (or corresponding interface circuitry, as discussed above). Examples of the other input device 1220 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 1200 may have any desired form factor, such as a handheld or mobile computer system (e.g., a cell phone, a smart phone, a mobile internet device, a music player, a tablet computer, a laptop computer, a netbook computer, an ultrabook computer, a personal digital assistant (PDA), an ultramobile personal computer, etc.), a desktop computer system, a server or other networked computing component, a printer, a scanner, a monitor, a set-top box, an entertainment control unit, a vehicle control unit, a digital camera, a digital video recorder, or a wearable computer system. In some embodiments, the computing device 1200 may be any other electronic device that processes data.

*Selected Examples*

The following paragraphs provide various examples of the embodiments disclosed herein.

Example 1 provides a computer-implemented method comprising receiving an input frame from an imager; defining a user space for the input frame; determining a total number of circles to initialize, wherein the total number of circles comprise a set of circles including a first circle; defining a set of shells in the user space based on the total number of circles, wherein the set of shells includes at least a first shell and a second shell; determining a circle radius for each circle in the set of circles; determining a shell radius for each shell in the set of shells, including a first radius for the first shell and a second radius for the second shell; initializing the first circle in the first shell in a center of the user space; selecting a starting position in the second shell for a second circle; initializing a subset of the set of circles in the second shell, wherein the subset includes the second circle, with each circle in the subset localized an equal distance from the center of the user space; and converting polar values of each circle in the set of circles to cartesian values to generate a cartesian system list of the set of circles.

Example 2 provides a method, a non-transitory computer-readable media, a system, and/or an apparatus according to any of the preceding or following examples further comprising identifying a maximum number of circles for each shell of the set of shells.

Example 3 provides a method, a non-transitory computer-readable media, a system, and/or an apparatus according to any of the preceding or following examples wherein initializing the first circle includes initializing the first circle with first polar values and wherein initializing the subset of the set of circles includes initializing each circle in the subset with second subset polar values.

Example 4 provides a method, a non-transitory computer-readable media, a system, and/or an apparatus according to any of the preceding or following examples wherein defining the user space includes defining a user space range, wherein defining the set of shells includes determining a total number of circle-occupied shells, and wherein determining the circle radius for each circle includes determining the circle radius based on the user space range and the total number of circle-occupied shells.

Example 5 provides a method, a non-transitory computer-readable media, a system, and/or an apparatus according to any of the preceding or following examples further comprising adding a random uniform perturbation to the cartesian values for the set of circles.

Example 6 provides a method, a non-transitory computer-readable media, a system, and/or an apparatus according to any of the preceding or following examples further comprising generating a circle distribution solution based on the cartesian system list of the set of circles.

Example 7 provides a method, a non-transitory computer-readable media, a system, and/or an apparatus according to any of the preceding or following examples wherein the input frame is a 3-dimensional input frame, wherein determining the total number of circles to initialize includes determining a total number of spheres to initialize, and wherein initializing the first circle includes initializing a first sphere.

Example 8 provides one or more non-transitory computer-readable media storing instructions executable to perform operations, the operations comprising: receiving an input frame from an imager; defining a user space for the input frame; determining a total number of circles to initialize, wherein the total number of circles comprise a set of circles including a first circle; defining a set of shells in the user space based on the total number of circles, wherein the set of shells includes at least a first shell and a second shell; determining a circle radius for each circle in the set of circles; determining a shell radius for each shell in the set of shells, including a first radius for the first shell and a second radius for the second shell; initializing the first circle in the first shell in a center of the user space; selecting a starting position in the second shell for a second circle; initializing a subset of the set of circles in the second shell, wherein the subset includes the second circle, with each circle in the subset localized an equal distance from the center of the user space; and converting polar values of each circle in the set of circles to cartesian values to generate a cartesian system list of the set of circles.

Example 9 provides a method, a non-transitory computer-readable media, a system, and/or an apparatus according to any of the preceding or following examples the operations further comprising identifying a maximum number of circles for each shell of the set of shells.

Example 10 provides a method, a non-transitory computer-readable media, a system, and/or an apparatus according to any of the preceding or following examples wherein initializing the first circle includes initializing the first circle with first polar values and wherein initializing the subset of the set of circles includes initializing each circle in the subset with second subset polar values.

Example 11 provides a method, a non-transitory computer-readable media, a system, and/or an apparatus according to any of the preceding or following examples wherein defining the user space includes defining a user space range, wherein defining the set of shells includes determining a total number of circle-occupied shells, and wherein determining the circle radius for each circle includes determining the circle radius based on the user space range and the total number of circle-occupied shells.

Example 12 provides a method, a non-transitory computer-readable media, a system, and/or an apparatus according to any of the preceding or following examples, the operations further comprising adding a random uniform perturbation to the cartesian values for the set of circles.

Example 13 provides a method, a non-transitory computer-readable media, a system, and/or an apparatus according to any of the preceding or following examples, the operations further comprising generating a circle distribution solution based on the cartesian system list of the set of circles.

Example 14 provides a method, a non-transitory computer-readable media, a system, and/or an apparatus according to any of the preceding or following examples, wherein the input frame is a 3-dimensional input frame, wherein determining the total number of circles to initialize includes determining a total number of spheres to initialize, and wherein initializing the first circle includes initializing a first sphere.

Example 15 provides an apparatus, comprising: a computer processor for executing computer program instructions; and a non-transitory computer-readable memory storing computer program instructions executable by the computer processor to perform operations comprising: receiving an input frame from an imager; defining a user space for the input frame; determining a total number of circles to initialize, wherein the total number of circles comprise a set of circles including a first circle; defining a set of shells in the user space based on the total number of circles, wherein the set of shells includes at least a first shell and a second shell; determining a circle radius for each circle in the set of circles; determining a shell radius for each shell in the set of shells, including a first radius for the first shell and a second radius for the second shell; initializing the first circle in the first shell in a center of the user space; selecting a starting position in the second shell for a second circle; initializing a subset of the set of circles in the second shell, wherein the subset includes the second circle, with each circle in the subset localized an equal distance from the center of the user space; and converting polar values of each circle in the set of circles to cartesian values to generate a cartesian system list of the set of circles.

Example 16 provides a method, a non-transitory computer-readable media, a system, and/or an apparatus according to any of the preceding or following examples, wherein the operations further comprise identifying a maximum number of circles for each shell of the set of shells.

Example 17 provides a method, a non-transitory computer-readable media, a system, and/or an apparatus according to any of the preceding or following examples, wherein initializing the first circle includes initializing the first circle with first polar values and wherein initializing the subset of the set of circles includes initializing each circle in the subset with second subset polar values.

Example 18 provides a method, a non-transitory computer-readable media, a system, and/or an apparatus according to any of the preceding or following examples, wherein defining the user space includes defining a user space range, wherein defining the set of shells includes determining a total number of circle-occupied shells, and wherein determining the circle radius for each circle includes determining the circle radius based on the user space range and the total number of circle-occupied shells.

Example 19 provides a method, a non-transitory computer-readable media, a system, and/or an apparatus according to any of the preceding or following examples, wherein the operations further comprise adding a random uniform perturbation to the cartesian values for the set of circles.

Example 20 provides a method, a non-transitory computer-readable media, a system, and/or an apparatus according to any of the preceding or following examples, wherein the operations further comprise generating a circle distribution solution based on the cartesian system list of the set of circles.

Example 21 provides a computer-implemented method comprising: providing a perceptron having a MAC multiplier architecture and an XNOR gate for binary multiplication; receiving a set of binary inputs at the perceptron; selecting, via a switch, one of a XNOR operation and an AND operation; performing the selected operation on the set of binary inputs and generating a plurality of initial outputs; and combining the plurality of initial outputs at a set of fast adders to generate a perceptron output.

Example 22 provides a method, a non-transitory computer-readable media, a system, and/or an apparatus according to any of the preceding or following examples, wherein the XNOR operation is a nonlinear expressive function and wherein the AND operation is a linear function, and wherein selecting, via the switch, one of the XNOR operation and the AND operation includes selecting between the nonlinear expressive function and the linear function.

Example 23 provides a method, a non-transitory computer-readable media, a system, and/or an apparatus according to any of the preceding or following examples, further comprising providing a set of weights, and wherein performing the selected operation on the set of binary inputs includes performing the selected operation on each of the set of binary inputs and a corresponding weight from the set of weights.

Example 24 provides a method, a non-transitory computer-readable media, a system, and/or an apparatus according to any of the preceding or following examples, further comprising adding a bias to each of the plurality of initial outputs.

Example 25 provides a method, a non-transitory computer-readable media, a system, and/or an apparatus according to any of the preceding or following examples, further comprising providing a bias, and wherein performing the selected operation on the set of binary inputs includes performing the selected operation on each of the set of binary inputs and the bias.

Example 26 provides a method, a non-transitory computer-readable media, a system, and/or an apparatus according to any of the preceding or following examples, further comprising providing a neural network having a plurality of layers, wherein providing the perceptron includes providing a plurality of perceptrons in each of the plurality of layers.

Example 27 provides a method, a non-transitory computer-readable media, a system, and/or an apparatus according to any of the preceding or following examples, further comprising providing an initializer having a floating point unit design including the perceptron.

Example 28 provides one or more non-transitory computer-readable media storing instructions executable to perform operations, the operations comprising: providing a perceptron having a MAC multiplier architecture and an XNOR gate for binary multiplication; receiving a set of binary inputs at the perceptron; selecting, via a switch, one of a XNOR operation and an AND operation; performing the selected operation on the set of binary inputs and generating a plurality of initial outputs; and combining the plurality of initial outputs at a set of fast adders to generate a perceptron output.

Example 29 provides a method, a non-transitory computer-readable media, a system, and/or an apparatus according to any of the preceding or following examples, wherein the XNOR operation is a nonlinear expressive function and wherein the AND operation is a linear function, and wherein selecting, via the switch, one of the XNOR operation and the AND operation includes selecting between the nonlinear expressive function and the linear function.

Example 30 provides a method, a non-transitory computer-readable media, a system, and/or an apparatus according to any of the preceding or following examples, the operations further comprising providing a set of weights, and wherein performing the selected operation on the set of binary inputs includes performing the selected operation on each of the set of binary inputs and a corresponding weight from the set of weights.

Example 31 provides a method, a non-transitory computer-readable media, a system, and/or an apparatus according to any of the preceding or following examples, the operations further comprising adding a bias to each of the plurality of initial outputs.

Example 32 provides a method, a non-transitory computer-readable media, a system, and/or an apparatus according to any of the preceding or following examples, the operations further comprising providing a bias, and wherein performing the selected operation on the set of binary inputs includes performing the selected operation on each of the set of binary inputs and the bias.

Example 33 provides a method, a non-transitory computer-readable media, a system, and/or an apparatus according to any of the preceding or following examples, the operations further comprising providing a neural network having a plurality of layers, wherein providing the perceptron includes providing a plurality of perceptrons in each of the plurality of layers.

Example 34 provides an apparatus, comprising: a computer processor for executing computer program instructions; and a non-transitory computer-readable memory storing computer program instructions executable by the computer processor to perform operations comprising: providing a perceptron having a MAC multiplier architecture and an XNOR gate for binary multiplication; receiving a set of binary inputs at the perceptron; selecting, via a switch, one of a XNOR operation and an AND operation; performing the selected operation on the set of binary inputs and generating a plurality of initial outputs; and combining the plurality of initial outputs at a set of fast adders to generate a perceptron output.

Example 35 provides a method, a non-transitory computer-readable media, a system, and/or an apparatus according to any of the preceding or following examples, wherein the XNOR operation is a nonlinear expressive function and wherein the AND operation is a linear function, and wherein selecting, via the switch, one of the XNOR operation and the AND operation includes selecting between the nonlinear expressive function and the linear function.

Example 36 provides a method, a non-transitory computer-readable media, a system, and/or an apparatus according to any of the preceding or following examples, the operations further comprising providing a set of weights, and wherein performing the selected operation on the set of binary inputs includes performing the selected operation on each of the set of binary inputs and a corresponding weight from the set of weights.

Example 37 provides a method, a non-transitory computer-readable media, a system, and/or an apparatus according to any of the preceding or following examples, the operations further comprising adding a bias to each of the plurality of initial outputs.

Example 38 provides a method, a non-transitory computer-readable media, a system, and/or an apparatus according to any of the preceding or following examples, the operations further comprising providing a bias, and wherein performing the selected operation on the set of binary inputs includes performing the selected operation on each of the set of binary inputs and the bias.

Example 39 provides a method, a non-transitory computer-readable media, a system, and/or an apparatus according to any of the preceding or following examples, the operations further comprising providing a neural network having a plurality of layers, wherein providing the perceptron includes providing a plurality of perceptrons in each of the plurality of layers.

Example 40 provides a method, a non-transitory computer-readable media, a system, and/or an apparatus according to any of the preceding or following examples, the operations further comprising providing an initializer having a floating point unit design including the perceptron.

Example 41 provides a method, a non-transitory computer-readable media, a system, and/or an apparatus according to any of the preceding or following examples, further comprising inputting the cartesian system list of the set of circles to a neural network that utilizes non-linear perceptrons, and determining, at the neural network, a circle packing problem solution.

Example 42 provides a provides a method, a non-transitory computer-readable media, a system, and/or an apparatus according to any of the preceding or following examples, wherein adding a perturbation to the cartesian values for the set of circles includes adding a perturbation to one or more circle positions for one or more circles of the set of circles.

Example 43 provides a provides a method, a non-transitory computer-readable media, a system, and/or an apparatus according to any of the preceding or following examples, wherein adding a perturbation to the cartesian values for the set of circles includes adding a perturbation to one or more circle radii for one or more circles of the set of circles.

Example 44 provides a computer-implemented method, comprising: receiving an input frame from an imager; defining a user space for the input frame; determining a total number of circles to initialize, wherein the total number of circles comprise a set of circles including a first circle; and converting polar values of each circle in the set of circles to cartesian values to generate a cartesian system list of the set of circles.

Example 45 provides a method, a non-transitory computer-readable media, a system, and/or an apparatus according to any of the preceding or following examples, further comprising defining a set of shells in the user space based on the total number of circles, wherein the set of shells includes at least a first shell and a second shell; determining a circle radius for each circle in the set of circles; and determining a shell radius for each shell in the set of shells, including a first radius for the first shell and a second radius for the second shell.

Example 46 provides a method, a non-transitory computer-readable media, a system, and/or an apparatus according to any of the preceding or following examples, further comprising initializing the first circle in the first shell in a center of the user space; selecting a starting position in the second shell for a second circle; and initializing a subset of the set of circles in the second shell, wherein the subset includes the second circle, with each circle in the subset localized an equal distance from the center of the user space.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

**Claims**

1. A computer-implemented method, comprising:

   receiving an input frame from an imager;
   defining a user space for the input frame;
   determining a total number of circles to initialize, wherein the total number of circles comprise a set of circles including a first circle;
   and
   converting polar values of each circle in the set of circles to cartesian values to generate a cartesian system list of the set of circles.

2. The computer-implemented method of claim 1, further comprising identifying a maximum number of circles for each shell of the set of shells.

3. The computer-implemented method of claims 1-2, wherein initializing the first circle includes initializing the first circle with first polar values and wherein initializing the subset of the set of circles includes initializing each circle in the subset with second subset polar values.

4. The computer-implemented method of claims 1-3, wherein defining the user space includes defining a user space range, wherein defining the set of shells includes determining a total number of circle-occupied shells, and wherein determining the circle radius for each circle includes determining the circle radius based on the user space range and the total number of circle-occupied shells.

5. The computer-implemented method of claims 1-4, further comprising adding a perturbation to the cartesian values for the set of circles.

6. The computer-implemented method of claims 1-5, further comprising generating a circle distribution solution based on the cartesian system list of the set of circles.

7. The computer-implemented method of claims 1-6, wherein the input frame is a 3-dimensional input frame, wherein determining the total number of circles to initialize includes determining a total number of spheres to initialize, and wherein initializing the first circle includes initializing a first sphere.

8. The computer-implemented method of claims 1-7, further comprising inputting the cartesian system list of the set of circles to a neural network that utilizes non-linear perceptrons, and determining, at the neural network, a circle packing problem solution.

9. The computer-implemented method of claims 1-8, further comprising:

   defining a set of shells in the user space based on the total number of circles, wherein the set of shells includes at least a first shell and a second shell;
   determining a circle radius for each circle in the set of circles; and
   determining a shell radius for each shell in the set of shells, including a first radius for the first shell and a second radius for the second shell.

10. The computer-implemented method of claim 9, further comprising:

   initializing the first circle in the first shell in a center of the user space;
   selecting a starting position in the second shell for a second circle; and
   initializing a subset of the set of circles in the second shell, wherein the subset includes the second circle, with each circle in the subset localized an equal distance from the center of the user space.

11. One or more non-transitory computer-readable media storing instructions executable to perform operations, the operations comprising:

   receiving an input frame from an imager;
   defining a user space for the input frame;
   determining a total number of circles to initialize, wherein the total number of circles comprise a set of circles including a first circle;
   defining a set of shells in the user space based on the total number of circles, wherein the set of shells includes at least a first shell and a second shell;
   determining a circle radius for each circle in the set of circles;
   determining a shell radius for each shell in the set of shells, including a first radius for the first shell and a second radius for the second shell;
   initializing the first circle in the first shell in a center of the user space;
   selecting a starting position in the second shell for a second circle;
   initializing a subset of the set of circles in the second shell, wherein the subset includes the second circle, with each circle in the subset localized an equal distance from the center of the user space; and
   converting polar values of each circle in the set of circles to cartesian values to generate a cartesian system list of the set of circles.

**12.** The one or more non-transitory computer-readable media of claim 11, the operations further comprising identifying a maximum number of circles for each shell of the set of shells.

**13.** The one or more non-transitory computer-readable media of claim 11, the operations further comprising adding a random uniform perturbation to the cartesian values for the set of circles.

**14.** The one or more non-transitory computer-readable media of claim 11, wherein the input frame is a 3-dimensional input frame, wherein determining the total number of circles to initialize includes determining a total number of spheres to initialize, and wherein initializing the first circle includes initializing a first sphere.

**15.** An apparatus, comprising:

a computer processor for executing computer program instructions; and
a non-transitory computer-readable memory storing computer program instructions executable by the computer processor to perform operations comprising:

receiving an input frame from an imager;
defining a user space for the input frame;
determining a total number of circles to initialize, wherein the total number of circles comprise a set of circles including a first circle;
converting polar values of each circle in the set of circles to cartesian values to generate a cartesian system list of the set of circles.

Deep Learning System 100

Interface Module 110

Initializer 120

Training Module 130

Validation Module 140

Inference Module 150

Datastore 160

**FIG. 1**

FIG. 2B

250

260

FIG. 2A

200

350

FIG. 3B

300

FIG. 3A

FIG. 4

400

FIG. 5

$X_0$ $W_0$

$X_n$ $W_n$

$602$

$B$

$Y$

**FIG.6A**

EP 4 557 239 A1

FIG.6B

700

Initializer
120

Inputs
710

Circle Pre-Calculation Module
720

Circle Determination Module
730

Output Determination Module
740

FIG. 7

EP 4 557 239 A1

FIG. 8

900

**FIG. 9**

FIG. 10

EP 4 557 239 A1

1100

**FIG. 11**

**COMPUTING DEVICE**
**1200**

| | |
|---|---|
| PROCESSING DEVICE 1202 | COMMUNICATION CHIP 1212 |
| MEMORY 1204 | BATTERY/POWER 1214 |
| DISPLAY DEVICE 1206 | GPS DEVICE 1216 |
| VIDEO OUTPUT DEVICE 1208 | VIDEO INPUT DEVICE 1218 |
| OTHER OUTPUT DEVICE 1210 | OTHER INPUT DEVICE 1220 |

ANTENNA

1222

**FIG. 12**

Europäisches
Patentamt

European
Patent Office

Office européen
des brevets

# EUROPEAN SEARCH REPORT

**Application Number**

EP 24 20 5138

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MLADENOVIC N ET AL: "Reformulation descent applied to circle packing problems", COMPUTERS AND OPERATIONS RESEARCH, OXFORD, GB, vol. 32, no. 9, 1 September 2005 (2005-09-01), pages 2419-2434, XP025365616, ISSN: 0305-0548 [retrieved on 2005-09-01] | 1-4,6,7, 9-12,14, 15 | INV. G06V10/82 G06F17/10 G06F30/00 G06T9/00 G06V10/48 G06V10/94 H04N19/00 |
| Y | * abstract * * page 2419 - page 2434 * | 5,13 | |
| Y | MACHCHHAR JINESH ET AL: "Dense packing of congruent circles in free-form non-convex containers", COMPUTER AIDED GEOMETRIC DESIGN, NORTH-HOLLAND, AMSTERDAM, NL, vol. 52, 21 March 2017 (2017-03-21), pages 13-27, XP029976038, ISSN: 0167-8396, DOI: 10.1016/J.CAGD.2017.03.006 * abstract * * page 13 - page 23 * | 5,13 | |
| X | AKSHAY KIRAN JOSE ET AL: "An Encoder-Decoder Approach for Packing Circles", ARXIV.ORG, CORNELL UNIVERSITY LIBRARY, 201 OLIN LIBRARY CORNELL UNIVERSITY ITHACA, NY 14853, 11 August 2023 (2023-08-11), XP091592355, * abstract * * page 1 - page 8 * | 8 | TECHNICAL FIELDS SEARCHED (IPC) G06V G06F G06T G06N |

The present search report has been drawn up for all claims

| Place of search | Date of completion of the search | Examiner |
|---|---|---|
| The Hague | 24 March 2025 | Visser, Michelle L. |